(19) Europäisches Patentamt
European Patent Office
Office européen des brevets

(11) **EP 2 813 862 A1**

(12) **EUROPEAN PATENT APPLICATION**
published in accordance with Art. 153(4) EPC

(43) Date of publication:
**17.12.2014 Bulletin 2014/51**

(51) Int Cl.:
*G01S 17/36* (2006.01)    *G01C 3/00* (2006.01)
*H01S 5/00* (2006.01)

(21) Application number: **12867875.2**

(22) Date of filing: **31.03.2012**

(86) International application number:
**PCT/CN2012/000422**

(87) International publication number:
**WO 2013/116963 (15.08.2013 Gazette 2013/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2012 CN 201210029344**

(71) Applicant: **Jiangsu Laitz Optoelectronics Technology Co., Ltd.**
**Changzhou, Jiangsu 213012 (CN)**

(72) Inventors:
• **DU, Xin**
**Changzhou**
**Jiangsu 213012 (CN)**

• **QIAO, Baiwen**
**Changzhou**
**Jiangsu 213012 (CN)**
• **ZHA, Xiaoyi**
**Changzhou**
**Jiangsu 213012 (CN)**

(74) Representative: **Windal-Vercasson, Gaelle I.M.**
**CABINET VIDON**
**Technopôle Atalante**
**16B Rue de Jouanet - BP**
**35703 Rennes Cedex 7 (FR)**

(54) **CALIBRATION METHOD AND DISTANCE MEASUREMENT DEVICE THEREOF BASED ON PHASE MEASUREMENT OF DOUBLE-WAVELENGTH LASER TUBE**

(57)    A calibration method and a distance measurement device thereof based on phase measurement of a double-wavelength laser tube. The method comprises the following steps: step 1, a first wavelength light-wave is transmitted to a target to be measured through a first light filter from a light wave transmitting device during forming an external light path, the light-wave is modulated from a high frequency oscillating signal (S101); step 2, a second wavelength light-wave is transmitted to the receiving device through a second light filter from the light wave transmitting device during forming an internal light path, as an internal light path signal of a basic reference, the second light-wave is generated from the high frequency oscillating signal (S102); step 3, the receiving device compares phases of the two sequentially received light-waves, and output a phase signal eliminated the base reference (S103).

A light-emitting device emitting the first wave long light-wave through the first filter to the measured object, the said light-wave reflecting back by the measured object,then being receiving by the receiver,wherein the said the first wave long light-wave acting as the external optical path signal generates by the high frequency oscillation signals modulation.

S101

The said light-emitting device emitting the second wave long light-wave through the second filter to the said receiver, wherein the said second light-wave acting as the internal signal of the substrate reference generates by the high frequency oscillation signals modulation.

S102

The said receiving device has a phase comparison with successively received the two said light-waves ,outputs signal which eliminates the substrate signal.

S103

FIG. 1

## Description

### FIELD OF THE INVENTION

The present invention relates to a distance measuring technology by photoelectric process, more particularly, relates to a measurement method and distance measuring devices based on dual-wavelength laser tube calibration phase.

### BACKGROUND OF THE INVENTION

Laser has been the invention of human beings felt proud that it has a precise, fast, easy to use, strong anti-interference characteristics, thus the development of laser technology has solved many of the technology that traditional cannot solve the technical barriers, and the use of Laser technology and electronic technology assembled laser rangefinder, in length, height, distance, speed, shape and other fields increasingly being civil, military and industrial industry attention, in foreign countries has been widely used in the following areas: the large industrial and mining enterprises, power petrochemical, water conservancy, communications, environment, architecture, geology, police, fire, explosion, marine, rail, anti-terrorism / military, scientific research institutions, agriculture, forestry, real estate, recreation / outdoor sports and so on..

In the laser distance measurement based on the principle of phase difference the modulated laser beam is used to irradiate the measured target, it is reflected by the measured object to be turned back, the phase change of the light beam in the process is produced in terms of the measured distance to the target, to be used in short-distance high-precision distance measurement, the measurement accuracy and precision is influenced by the device characteristics of the internal components. Laser rangefinders demand higher accuracy, the circuit complexity and precision devices demand is greatly increased. Therefore, environmental factors, such as temperature and the device lifetime impact on device performance, leading to device generates a phase shift cannot be ignored. The prior art often uses internal, external optical path phase difference compensation principle to eliminate additional phase shift of the circuit system, and ensure that the measurement data will not affect by the external environment factors. Eliminate additional phase shift of the phase difference compensation principle, summarized as follows:

Setting each late phase difference of the measurement signal travels the journey from the internal optical path to the external optical path successively is $\Psi_{internal}$ and $\Psi_{external}$, $\Delta\Psi$ is the additional phase shift generated by the electrical signal generates inside the apparatus in the process circuit transmission and photoelectric conversion, then the internal, external measurement signal $e_{internal}$ and $e_{external}$, the phase

detector in the phase comparison result is

$$\Phi_{internal} = \Psi_{internal} + \Delta\Psi$$

$$\Phi_{external} = \Psi_{external} + \Delta\Psi$$

In the above formula, $\Delta\Psi$ with the apparatus in a different working environment arising from changes in the state, is the random phase shift, can not be accurately calculated through the solution, so when for the distance measurement, alternates using the internal, external optical path to measure the phase, the alternating short process, can be regarded as additional phase shift unchanged, then taking the internal and external optical path difference between the phase comparison result as a measurement result, i.e.

$$\Phi = \Phi_{external} - \Phi_{internal} = \Psi_{external} - \Psi_{internal}$$

The above results $\Phi$ has been eliminated the influence of additional phase shift instability, thus ensuring the accuracy of distance measurement.

The calibration method in the period art is as follows:

(1) Single emitting single receiving system, i.e. the one-way transmission light beam one-way receiving optical signals, via a controlled mechanical device realized the switch of the internal optical path and external optical path, by calculating the phase value around switching the internal, external optical path of the phase to process the phase correction, elimination the environmental uncertainty phase interference. As a result of mechanical switches, mechanical response time (usually hundreds of milliseconds), non-real-time calibration, and the structure is relatively complex, prone to mechanical wear and failure, short life, is not suitable for industrial precision instrument.

(2) Single emitting dual-receiving system, i.e. the single light beam emitted and received internal optical signal and external optical signal respectively by two-way, two for processing received signals and calculates the phase difference, thereby eliminating environmental uncertainty phase disturbance. Two avalanche diodes (Avalanche Photo Diode, APD) in the system respectively receive the external optical signals, as APD expensive (currently, usually more than $ 10), using two APD not only the high cost, but also easy to produce with the dual amplifier circuit same frequency interference.

(3) Traditional dual-emitting single receiving system, i.e. the same wavelength light-wave emitted dual independent and successively received internal optical signal and external optical signal by the receiving device respectively, two for processing received signals and calculates the phase difference, thereby eliminating the environmental uncertain phase interference. The system uses two separate optical generating device respectively, the occurrence of two identical wavelengths of light-wave signals, and occurs as two optical generating device, in particular the laser tube, and due to the internal, external optical path different working time of working time and the performance difference between the two laser extremely easy produce different temperature drift can not be used to eliminate the above-mentioned principle, thereby generating the drift measured distance.

In summary, the above three solutions have defects in the practical application.

**SUMMARY OF THE INVENTION**

The object of the present invention is to provide a calibration of the phase measurement method, based on traditional dual-emitting single receiving system, using a different wavelength and the light emitting chip in one of the dual-wavelength laser tube, to solve the problem of phase drift caused in the period art the two independent same wavelength laser tube can not be completely calibration temperature.

The object of the present invention is achieved like this, a calibration method based on phase measurement of double-wavelength laser tube, comprising the steps of:

Step 1 is the formation of external optical path: the light-emitting device of the system (1, 2) emitting the first light-wave through the first filter (3) to the measured object, the said light-wave focused by the optical device (5, 6) after reflecting back by the measured object, then being receiving by the receiving device (7) and as a measured external optical path of the system;

The said light-wave through the a first filter (3),while some light-wave energy is reflecting to the receiving device by the filter (3) or other reflective film and filter by the second filter (4);

Step 2 is the formation of internal optical path: the light-emitting device (1, 2) of the system emitting the second light-wave filtered by the first filter (3) and the said filter or other reflective film reflecting it to the receiving device and through the second filter (4) received by said receiving device (7) directly, wherein the light-wave through the second filter (4) will be used as the base reference internal optical path of the phase measurement system;

Step 3: when Steps 1 and 2 is working, the first light-wave and the second light-wave obtained by the light-emitting device(1,2) switching successively , to make the said receiving device (7) proceed phase comparison the internal light-wave with, external light-wave from optical path received successively, and to output the phase signal which eliminates the base reference.

Another objective of the present invention is to provide a preferable technical solution , wherein light-wave of the said internal and external optical path are emitted by the same light emitting device (1, 2), the said first and second light-wave have different wavelengths.

Yet another objective of the present invention is to provide a preferable technical solution, wherein said other reflective film comprises a reflective prism, mirror, and other components with optical reflection function, and an optical fiber, an optical light guide and the other material with the light guide function.

Still another object of the present invention is to provide a phase measurement calibration device, said device includes:

A light-emitting device, being used for emitting dual-wavelength optical signal that has a stable frequency, phase and amplitude, the said light-emitting device is emitting different wavelength dual-wavelength laser tube , or other device with two or more wavelengths light-emitting function;

Photoelectric converting device, being used for respectively receiving the said external optical path reflected by the measured object and the said internal optical path signal filter by the second filter;

Filter, being used for turning on and off the internal and external optical path signal, while it can reflect the external optical path light-wave to the internal optical path, the said filter is an optical glass coating, optical plastic coating or other colored optical element with the above function;

Phase detector, being used for respectively receiving the signals output by the said photoelectric conversion and the two signals are successively phase compared, outputs the phase signal which eliminates the base reference.

Mixer, being used for respectively mixing the internal, external optical path signal outputs by the said photoelectric converting device with the same mixing signal and then after amplifying outputs to the said phase detector. The said photoelectric converting device and the said mixer all are set up in the same receiving device, the said receiving device is a photodiode, photoelectric triode, avalanche photo diode or photomultiplier

Oscillator, being used for generating and outputting the said high-frequency oscillation signal and said mixed signal, the said oscillator is the crystal oscillator, the lock phase loop, frequency multiplier, frequency divider, or direct digital frequency synthesizer;

Amplifier, being used for receiving the output signal of the said photoelectric conversion device and amplifying these signals and outputting them.

Still another object of the present invention is to provide an above phase measurement calibration device.

Still another objective of the present invention provides a calibration method based on dual-wavelength laser tube dual-emitting single receiving dual-optical path phase measurement, dual integrated light emitting devices are used to produce internal, external optical path through different filters separately, then receiving the return signal of the internal optical path and external optical path separately by a signal receiving device, and through the phase comparison between the two signals obtained the difference phase, to realize phase compensation and calibration purpose, to avoid the environmental changes bringing the uncertain phase noises in the circuit, to improve the Laser distance measurement precision, to increase the system distance measurement stability, to decrease the environmental factors disturbance to the distance measurement error, to reduce the system performance requirements for components, thereby reducing the cost of the system, strengthening the laser ranging in various industry applications.

Compared with the traditional dual-emitting single receiving system, dual-wavelength laser tube in technical solution of the present invention is with an integrated way making the two different wavelengths of laser tube transmitter chip being bonded in one laser tube, so the two laser transmitter chip has the same thermal conductivity and heat dissipation characteristics, therefore, temperature drift generated from the environment temperature and the spontaneous heating is the common mode; while using different wavelength optical emitting system and the filter system separate the internal and external optical path effectively, compared with traditional dual-emitting single receiving solution, structurally different positions or angles place the same wavelength of the laser tube can improve the compactness of the system and reduce the bringing the RF crosstalk and crosstalk interference problem of the dispersion emitting.

**BRIEF DESCRIPTION OF THE DRAWINGS**

Figure 1 is flow chart of the phase measurement calibration method provided by the present invention embodiment;
Figure 2 is a framework of the system using distance measurement device of double-wavelength laser tube which provided by the present invention embodiment;
Figure 3 is a framework of the phase measurement calibration device provided by the present invention first embodiment;
Figure 4 is a framework of the phase measurement calibration device provided by the present invention second embodiment;
Figure 5 is a structure chart of the phase measurement calibration device provided by the present invention embodiment.

**DETAILED DESCRIPTION OF EMBODIMENTS**

To make the objects, the technical solutions and advantages of the present invention more clearly understood, with the accompanying drawings and the embodiments, the present invention will be described in further detail. It should be understood that the specific embodiment described herein are merely examples to illustrate the invention, not to limit the present invention.

The present invention is to provide a dual-wavelength laser tube dual-emitting single receiving dual-optical phase measurement calibration method, wherein one light-emitting device successively emits two different wavelengths light-wave through the filter, respectively, corresponding to produce internal and external optical path signal, and then through a signal receiving device the return signal of the internal optical path signal and the external light-wave signal is received respectively, and makes phase comparing the return signal of the internal optical path and the external optical path to eliminate additional phase shift to achieve the phase error compensation and calibration destination, while avoiding the same wavelength laser tube independent of the traditional method brings period temperature drift inconsistent and electromagnetic crosstalk interference problems, to optimize the structure of the distance measurement device, and to improve the stability and reliability of the product.

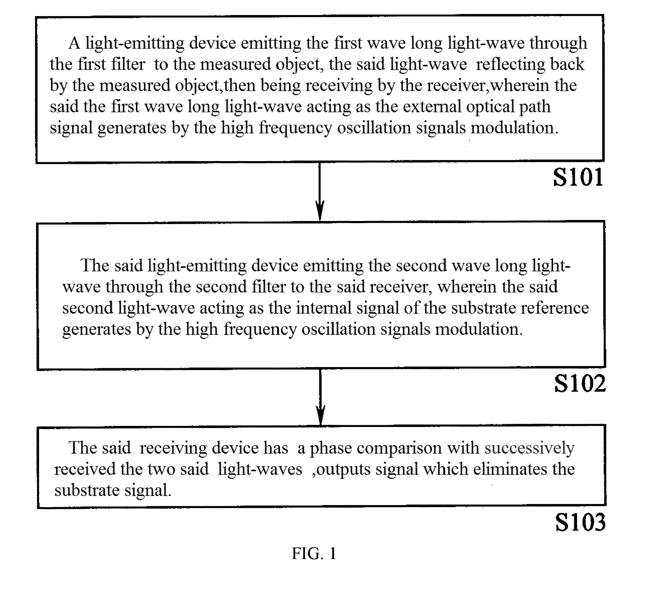

Figure 1 shows a flow-chart for the phase measurement calibration method according to an embodiment of the present invention, as detailed below:

In step S101, a light-emitting device emitting the first wave long light-wave that is through the first filter to the measured object, the said light-wave reflecting back by the measured object, then being received by the receiving device, wherein the said the first wave long light-wave acting as the external optical path signal is generated by the high frequency oscillation signals modulation;
In step S102, the said light-emitting device emitting the second wave long light-wave that is through the second filter to the said receiving device, wherein the said second light-wave acting as the internal signal of the substrate reference is generated by the high frequency oscillation signals modulation;
In step S103, the said receiving device makes a phase comparison with successively received the two said light-waves, outputs signal which eliminates the substrate signal.

In the embodiment of the present invention, the phase comparison of the two light-wave signals can be the light-wave which mix with the mixing signal, wherein the mixing signal mixing with the two light-wave signals can be the same high frequency oscillation signal, also can be the same frequency, the same phase or have a fixed phase difference two high-frequency oscillation signal.

In the embodiment of the present invention, the above two light-waves are also laser with different wavelengths.

In the embodiment of the present invention, the receiving device can receive the first light-wave, and then receive the second light-wave; or the second light-wave is received first, and then receives the first light-wave. As an embodiment of the present invention, the receiving device can be a photodiode, photoelectric triode, APD, photomultiplier tube and the device having a photoelectric conversion function.

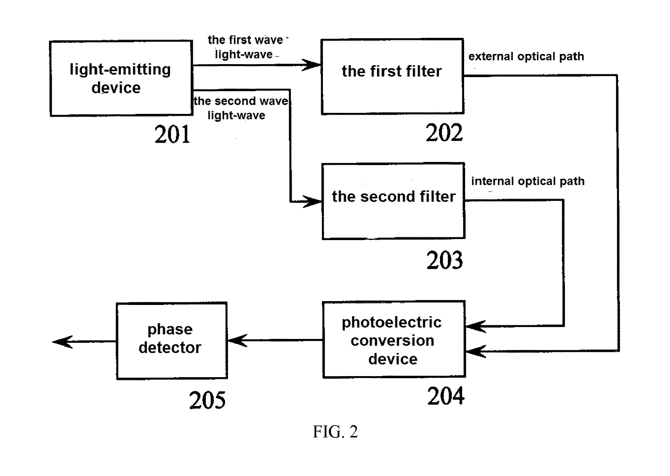

Figure 2 is a framework of the system having dual-wavelength laser tube dual-emitting single receiving phase measurement calibration device which provided by the present invention embodiment, for convenience of description, the present invention shows only the part related to the embodiment.

A light-emitting device 201 according to the received the first high-frequency oscillation signal generates a modulation first wave light-wave, and the said light-wave passing through the first filter 202 as the external optical signal emitted to the measured object; simultaneously the said light-wave reflected by the first filter 203 and cut-off by the second filter; and light-emitting device 201 emitting the second wave long light-wave emitted through the second filter 203 to a photoelectric conversion device 204 as the internal optical path signal, while the second wave long light-wave cut-off by the first filter 202. The photoelectric conversion device 204 photoelectrically converts and outputs the said internal optical path signal and external path signals, respectively. Finally the phase detector 205 receives the signal output by the photoelectric conversion device respectively, and the two signals are phase compared, outputs the phase signal which eliminates the base reference

In the embodiment of the present invention, the light-emitting device 201 includes a clock generator, a modulation drive circuit, a light emitting device, wherein the light emitting device emits light-waves against driving by the driver , the light emitting device may be a laser diode (Laser Diode, LD), the light emitting diode (Light Emitting Diode, LED) or other light emitting device. As an embodiment of the present invention, light emitting device 201 may be a laser wave transmitting device, such as a laser diode, emits a laser light.

In the preferable embodiment of the present invention, the first filter 202 and the second filter 203 are both optical device, the purpose with it is to distinguish, conduct or cut-off the first and the second wave long light-wave, to construct the internal and external devices of the distance measurement device. The said filter is an optical glass coating, optical plastic coating or other colored optical element with the above function.

In the preferable embodiment of the present invention, the first filter 202 and the second filter 203 align the photoelectric conversion device 204 , the light-wave directly is incident on the photoelectric conversion device 204; also can set a mirror between the second filter and the photoelectric conversion device 203 to change the optical path, in order to received by the photoelectric conversion device 204 ; also can set a optical signal transmission line between the second filter 203 and the photoelectric conversion device 204 , the transmission line can be optical fiber, light pipe.

In the preferable embodiment of the present invention, the photoelectric conversion device 204 can be a photodiode, photoelectric triode, APD, photomultiplier tube and other photoelectric conversion devices.

In the preferable embodiment of the present invention, the photoelectric conversion device 204 can first receive the external optical path light-wave, and then receive the internal optical path light-wave, or to receive internal optical path light-wave first, and receive the external optical path light-wave later.

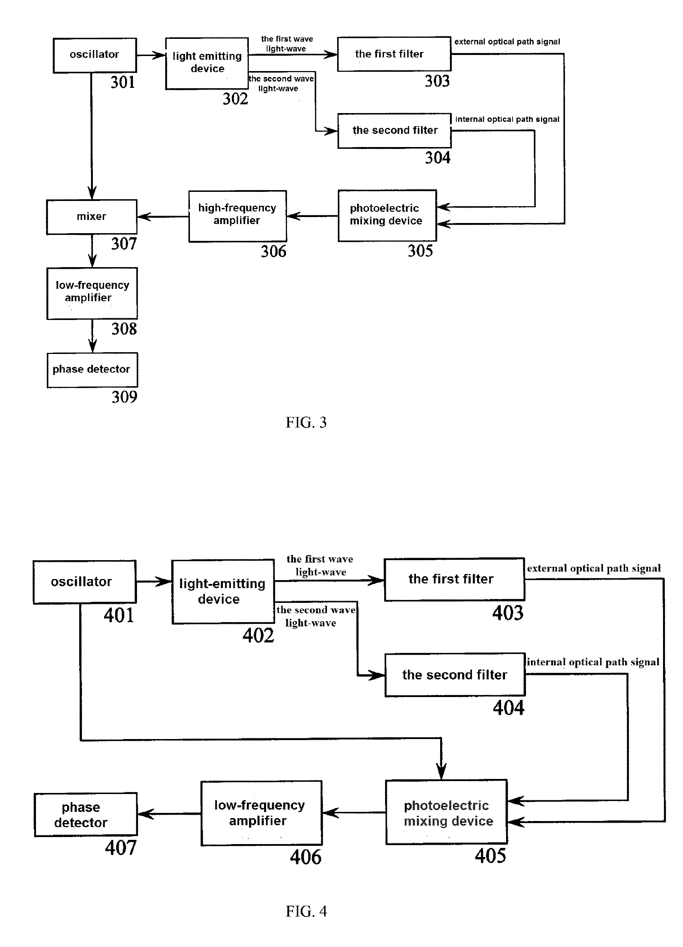

Figure 3 is a framework for the phase measurement calibration device provided by the present invention first embodiment, for convenience of description, the present invention shows only the part related to the embodiment, compared with Figure 2, the present calibration device includes an oscillator 301, a light emitting device 302, a first filter 303, a second filter 304, the photoelectric conversion device 305, and high-frequency amplifier 306, a mixer 307, a low-frequency amplifier 308 and the phase detector 309 that is used for signal conditioning and phase to obtain.

The same frequency phase the first high-frequency oscillation signal and the second high-frequency oscillation signal are generated by the oscillator 301 , the oscillator 302 receives the first high-frequency oscillation signal from the oscillator 301, the first and second wave long light-wave are transferred, and emits it as the optical path signal; said first wave long light-wave through the first filter 303 to the measured object, is reflected and turned back by the measured object, the photoelectric conversion device 305 receives the returned back external optical path signal, after photoelectric converting outputs the electrical signal, the output signal is the high frequency electrical signal, amplifies by the high frequency amplification device 306 and then outputs them, the mixer 307 receives a signal from the amplification device 306 and mix with the second high frequency oscillator signal form amplification device 301, outputs the signal after mixing, the said mixing signal after amplifying by low frequency amplification308 device goes into the phase detector 309. Then, they said second wave long light-wave reflected by the first filter through a second filter 304 as the light-wave of the internal optical path signal, as the said external optical path signal process, and finally the internal and external optical path detects by the phase detector and outputs the phase difference signal.

In the preferable embodiment of the present invention, the oscillator 301 can be crystal, crystal oscillator, PLL (phase locked loop), DDS (Direct Digital Synthesizer) or other frequency generating devices and circuits.

In the preferable embodiment of the present invention, the mixer 307 can be an analog multiplier, frequency down conversion mixer or other electronic mixer and the photodiode, photoelectric triode, APD (avalanche photo diode), a photomultiplier tube and other photoelectric mixing devices with the mixing function.

In the preferable embodiment of the present invention, the photoelectric conversion device 305 and the mixer 307 can be replaced by receiving devices, which can achieve a photoelectric conversion device 305 and the mixer 307 functions. As a preferable embodiment of the present invention, the receiving device can be a photodiode, photoelectric triode, APD, PMT (photomultiplier tube) or other device with a photoelectric conversion function.

In the preferable embodiment of the present invention, the high frequency amplifier 306 amplifies the received high frequency signal, that is very expensive, low-frequency amplification device 308 amplifies the mixed low frequency electric signal, that is relatively low, if other components of the circuit have a good performance, high-frequency amplification device 306 and low-frequency amplification device 308 can be omitted, or one omitted. If one receiving device replaces the photoelectric conversion device 305 and the mixer 307, as a result the high-frequency amplification device 306 may be omitted, and then to make directly connect the receiving device 305 to low amplification device 308 low, the cost is comparatively low.

Figure 4 is a framework for the phase measurement calibration device provided by the present invention second embodiment, for convenience of description, the present invention shows only the part related to the embodiment, compared with Figure 3, the calibration device includes oscillating 401, light emitting device 402, the first filter 403, the second filter 404, the low frequency amplification device 406, phase detector 407, and:

Photoelectric mixing device 405, being used for photo electrically converting the receiving the internal optical path light-wave and the external optical path light-wave reflected by the measured object, respectively, and respectively outputs the mixed signal.

In the preferable embodiment of the present invention, the receiving device 405 can replace the photoelectric conversion device 305 and the mixer 306 in Figure 3.

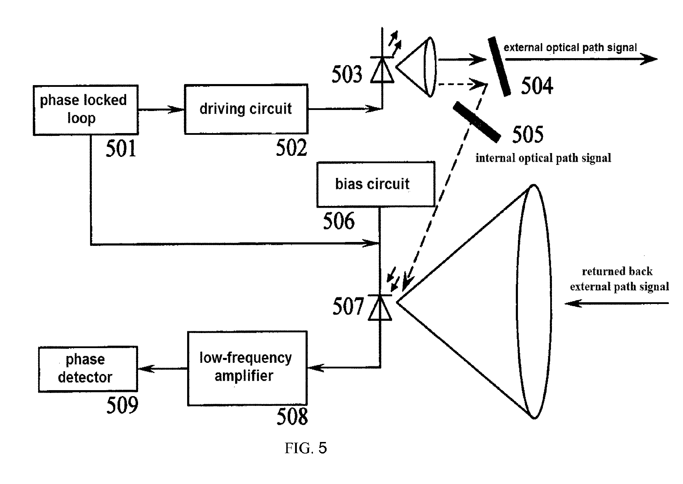

Figure 5 is a structure chart for the based on dual-wavelength laser tube phase measurement calibration device provided by the first and the second present invention embodiment. The PLL 501 and the driving circuit 502 based on the high frequency signal drive the dual-wavelength light emitting device 503 emits light-waves, the emitting first wave long light-wave is regarded as the external optical path signal after transmitting through the first filter 504; and then the dual-wavelength light emitting device 503 emitting the second wave light-wave after reflecting by the first filter 504, passes through the second filter 505 and acting as the internal optical path signal. The internal and external optical path separately is received by the receiving device 507 and passes through the bias circuit 506 and then photoelectric converse and mix with the high-frequency mixing signal output by the PLL 501, and after amplifying by the low-frequency amplifier 508 outputs to the phase detector 509. The said phase detector 509 processes phase comparison with the two receiving signals and output the phase, which eliminates the substrate reference phase.

In the preferable embodiment of the present invention, the light-wave from the dual-wavelength light emitting device 503 passing through the first filter 504 aligns with the receiving device 507, to make the light-wave directly incident to the receiving device 507; also can set a mirror or mirror unit 510 between the second filter 505 and the receiving device 507 to change the optical path, to facilitate receiving device receiving; and also the optical signal transmission line between the second filter 505 and the receiving device 507 can be installed to complete the internal optical path signal transmission, the said transmission line can be an optical fiber, an optical light guide and the other components with the light guide function.

In the preferable embodiment of the present invention, the first filter 504 can be provided behind the returned back external optical path signal, the dual-wavelength long light emitting device 503, as the device switches the external optical path signal, emitting light-wave after passing through the first filter 504 aligns with the receiving device 507, makes the light emitting to the receiving device 507 directly; also can set a mirror or mirror unit 510 between the second filter 505 and the receiving device 507 to change the optical path, to facilitate receiving device receives; and also can install optical signal transmission line between the second filter 505 and the receiving device 507 to complete the internal optical path signal transmission, the said transmission line can be an optical fiber, an optical light guide and the other components with the light guide function.

One light emitting device that generates one way light-wave in the prior art requires a light beam converting device to change the optical path, to obtain the internal and external optical path, the light beam converting device will generate mechanical load after several times converting, mechanical wear is inevitable, the response time of the circuit is poor, the other converting device with beam inevitably leads to circuit complexity, bulky, high cost; in contrast to the prior art, in the embodiment of the present invention the control circuit to control the switch or switches can be used to avoid the use of mechanical switch control, and the control circuit to control in the present invention is with fast the response time, the interval time of receiving internal optical path signal and external optical path signal is short, the switching interval time is in milliseconds, the surrounding environment can be considered constant during circuit switching, the circuit is not affected, do not affect the measurement accuracy.

The prior art uses a light emitting device generates one light-wave, it demands beam-splitting lens producing the internal and external two light-waves at the same time, so need to use double APD (avalanche photo diode) receiving device receives light transmitted simultaneously, as the APD waste board space, and The program costs 20% higher than the technical solution of the present invention.

Furthermore, in the prior art, there are also programs using the traditional dual-emitting single receiving method, that is two independent LD (laser tube) generating two wave light-wave signal forms the internal and external optical path and passes through the APD (avalanche photo diode) and separately receives the said signal reached the phase without substrate reference. During implementation of the program, since dual independent LD project at work, different working hours and working environment led to two LD with different working status and cannot be completely eliminated substrate signal; In addition, since the LD component has a larger discreteness, the differences of the different tubes also cause large errors directly. Compared with said double APD and double LD program in the prior art, the technical solution of the present invention with dual-core package single-chip dual-wavelength laser tube, by the means of the switching of the internal and external optical path and the correction of the dual-wavelength laser tube completely eliminate APD and LD its common-mode effects, achieves greater accuracy of the said dual APD and dual LD program.

In summary, the present invention provides a calibration method based on a dual-wavelength laser tube emitting single optical receiving, two different wavelengths and corresponding filter switch the internal and external optical path signal being used, respectively, and then through a signal receiving device respectively receiving the returned signal of the internal optical path signal and the external optical path signal, the internal optical path and the external optical path returned signal is made the photo electrically converting, mixing, amplifying and phasing, outputs the signal which eliminated the substrate, thus avoiding environmental changes introduced in the circuit uncertain phase noises, and be controlled by the control circuit, the internal, external optical path switching, so as to realize sustained and rapid phase error compensation and calibration purpose, reducing the environmental impact of the ranging error, improving the accuracy of the laser measurement distance measurement, enhancing the stability of system ranging, and reducing the system performance requirements for components, thereby reducing the cost of the system, strengthening the laser ranging applications in various industries.

From the foregoing description, one skilled in the art can easily ascertain in the essential characteristics of this invention, and without departing from the spirit and scope thereof, can make various changes and modifications of the invention to adapt it to various uses and conditions without undue experiment.

**Claims**

1. A calibration method based on phase measurement of double-wavelength laser tube, is **characterized in that**: the said method includes the following steps:

   Step 1 is the formation of external optical path: the light-emitting device of the system (1, 2) emitting the first light-wave through the first filter (3) to the measured object, the said light-wave focused by the optical device (5, 6) after reflecting back by the measured object, then being received by the receiving device (7) and as a measured external optical path of the system; The said light-wave through the a first filter (3), while some light-wave energy is reflected to the receiving device by the filter (3) or other reflective film and filter by the second filter (4) ;
   Step 2 is the formation of internal optical path: the light-emitting device of the system (1, 2) emitting the second light-wave filter by the first filter (3) and the said filter or other reflective film reflected to the receiving device and through the second filter (4) received by the said receiving device (7) directly, wherein the light-wave through the second filter (4) will be the base reference internal optical path of the phase measurement system;
   Step 3: when Steps 1 and 2 is working, the first light-wave and the second light-wave obtained by the light-emitting device (1,2) switching successively, the said receiving device (7) proceed phase comparison with the internal, external optical path received successively is made, and outputting the phase signal which eliminates the base reference.

2. A calibration method based on phase measurement of double-wavelength laser tube, according to claim 1, **characterized in that**: said internal external optical light-wave are emitted by the same light-emitting device (1, 2), said first wavelength and the second wavelength have different wavelengths.

3. A calibration method based on phase measurement of double-wavelength laser tube, according to claim 1, **characterized in that**: said other reflective film comprises a reflective prism, mirror, and other components with optical reflection function, and an optical fiber, an optical light guide and the other material with the light guide function.

4. A calibration method based on phase measurement of double-wavelength laser tube, according to claim 1, **characterized in that**: said receiving device (7) makes phase comparison with the said internal, external two optical path received successively, and outputting the phase signal which eliminates the base reference.

5. Any method according to claim 1 to 4, **characterized in that**: said two light-waves are all laser.

6. A calibration device based on phase measurement is **characterized in that**: said device comprises:

> A light-emitting device, using for emitting dual-wavelength optical signal, the light-wave signal having a stable frequency, phase and amplitude, the said light-emitting device is a emitting different wavelength dual-wavelength laser tube , or other device with two or more wavelengths light-emitting function;
> Photoelectric converting device, being used for respectively receiving the said external optical path reflected by the measured object and the said internal optical path signal filter by the second filter;
> Filter, being used for turning on and off the internal and external optical path signal, while it can reflect the external optical path light-wave to the internal optical path, the said filter is an optical glass coating, optical plastic coating or other colored optical element with the above function;
> Phase detector, being used for respectively receiving the signals output by the said photoelectric conversion and the two signals are successively phase compared, outputs the phase signal, which eliminates the base reference.

7. A device according to claim 6, is **characterized in that**: said device comprises:

> Mixer, being used for respectively mixing the internal, external optical path signal outputs by the said photoelectric converting device with the same mixing signal and then after amplifying outputs to the said phase detector.

8. A device according to claim 7, is **characterized in that**: said photoelectric conversion device and said mixer are put in a receiving device, said receiving device is a photodiode, photoelectric triode, avalanche photo diode or photomultiplier.

9. A device according to claim 6, is **characterized in that**: said device comprises:

> Oscillator, being used for generating and outputting the said high-frequency oscillation signal and said mixed signal, the said oscillator is the crystal oscillator, the lock phase loop, frequency multiplier, frequency divider, or direct digital frequency synthesizer;
> Amplification device, being used for receiving the output signal of the said photoelectric conversion device and amplifying these signals and outputting them.

10. A distance measurement device likes which includes any item according to claim 5 to 9.

A light-emitting device emitting the first wave long light-wave through the first filter to the measured object, the said light-wave reflecting back by the measured object,then being receiving by the receiver,wherein the said the first wave long light-wave acting as the external optical path signal generates by the high frequency oscillation signals modulation.

S101

The said light-emitting device emitting the second wave long light-wave through the second filter to the said receiver, wherein the said second light-wave acting as the internal signal of the substrate reference generates by the high frequency oscillation signals modulation.

S102

The said receiving device has a phase comparison with successively received the two said light-waves ,outputs signal which eliminates the substrate signal.

S103

FIG. 1

FIG. 2

EP 2 813 862 A1

FIG. 3

FIG. 4

external optical path signal

503

504

505

internal optical path signal

phase locked loop

501

driving circuit

502

bias circuit

506

returned back external path signal

507

phase detector

509

low-frequency amplifier

508

FIG. 5

# INTERNATIONAL SEARCH REPORT

International application No.

**PCT/CN2012/000422**

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G01S, G01C, H01S

Documentation searched other than minimum documentation to the extent that such documents are included in the fields searched

Electronic data base consulted during the international search (name of data base and, where practicable, search terms used)

CNABS, VEN: JIANGSU LAITZ OPTOELECTRONICS TECHNOLOGY; DU, Xin; QIAO, Baiwen; ZHA, Xiaoyi; ranging, dual wavelength, inner, external, laser, distance, calibrate, phase, adjust, light, path, waveleng?h, reflect, echo

**C. DOCUMENTS CONSIDERED TO BE RELEVANT**

| Category* | Citation of document, with indication, where appropriate, of the relevant passages | Relevant to claim No. |
|---|---|---|
| X | CN 101581783 A (ZHANG, Junzhong), 18 November 2009 (18.11.2009), description, pages 2-8, and figures 1-9 | 1, 4-5, 10 |
| Y | | 3 |
| A | | 2 |
| Y | CN 101762809 A (GUANGZHOU BEICAI ELECTRO OPTICS TECHNOLOGY CO., LTD.), 30 June 2010 (30.06.2010), description, paragraph 89, and figures 6 and 7 | 3 |
| A | | 1-2, 4-10 |
| A | CN 101813472 A (WUHAN UNIVERSITY), 25 August 2010 (25.08.2010), the whole document | 1-10 |
| A | JP 2006-329797 A (SOKKIA CO., LTD.), 07 December 2006 (07.12.2006), the whole document | 1-10 |
| A | CN 101383485 A (BEIJING UNIVERSITY OF TECHNOLOGY), 11 March 2009 (11.03.2009), the whole document | 1-10 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 21 September 2012 (21.09.2012) | **01 November 2012 (01.11.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Yaling** Telephone No.: (86-10) **62085722** |

Form PCT/ISA/210 (second sheet) (July 2009)

## INTERNATIONAL SEARCH REPORT
Information on patent family members

International application No.

**PCT/CN2012/000422**

| Patent Documents referred in the Report | Publication Date | Patent Family | Publication Date |
|---|---|---|---|
| CN 101581783 A | 18.11.2009 | US 2009284822 A1 | 19.11.2009 |
| CN 101762809 A | 30.06.2010 | WO 2011079497 A1 | 07.07.2011 |
| | | US 20120176594 A1 | 12.07.2012 |
| CN 101813472 A | 25.08.2010 | CN 101813472 B | 28.12.2011 |
| JP 2006-329797 A | 07.12.2006 | None | |
| CN 101383485 A | 11.03.2009 | None | |

Form PCT/ISA/210 (patent family annex) (July 2009)

# INTERNATIONAL SEARCH REPORT

International application No.

**PCT/CN2012/000422**

**A. CLASSIFICATION OF SUBJECT MATTER**

G01S 17/36 (2006.01) i

G01C 3/00 (2006.01) i

H01S 5/00 (2006.01) i

Form PCT/ISA/210 (extra sheet) (July 2009)